# EUROPÄISCHE PATENTSCHRIFT

(11) **EP 3 669 081 B1**
(45) Veröffentlichungstag und Bekanntmachung des Hinweises auf die Patenterteilung: **07.06.2023**
(21) Anmeldenummer: 17754710.6
(22) Anmeldetag: 17.08.2017
(51) Int. Cl.: F04C 25/02, F04C 29/06, F04C 29/12, F04C 18/344

(54) **KFZ-VAKUUMPUMPEN-ANORDNUNG**
MOTOR VEHICLE VACUUM PUMP ARRANGEMENT
ENSEMBLE DE POMPES À VIDES DE VÉHICULE À MOTEUR

(43) Veröffentlichungstag der Anmeldung: 24.06.2020
(73) Patentinhaber: Pierburg Pump Technology GmbH, 41460 Neuss (DE)
(72) Erfinder: SCHNURR, Steffen, 45133 Essen (DE); AL-HASAN, Nabil Salim, 41352 Korschenbroich (DE); RUSS, Stanislaus, 41065 Mönchengladbach (DE); GRÜNE, Tobias, 59757 Arnsberg (DE)
(74) Vertreter: terpatent Patentanwälte ter Smitten Eberlein-Van Hoof Rütten Daubert
(86) Internationale Anmeldenummer: PCT/EP2017/070856
(87) Internationale Veröffentlichungsnummer: WO 2019/034256

(56) Entgegenhaltungen:
- EP-A1- 2 568 180
- EP-A2- 2 554 848
- WO-A1-2015/060030
- DE-A1-102013 221 730

## Beschreibung

Die Erfindung betrifft eine elektrische KFZ-Vakuumpumpen-Anordnung mit einem Gehäuseverbund mit einer Einlassöffnungsanordnung mit einer Einlassöffnung und einer Auslassöffnungsanordnung mit einer Auslassöffnung, der ein Pumpenaggregat und einen Antriebsmotor aufweist, wobei das Pumpenaggregat ein Pumpenrotorgehäuse bestehend aus einer einlass- und auslassseitigen Stirnwand und einem dazwischen angeordneten Pumpenrotorgehäuseteil aufweist, die einen Pumpenrotorraum einschließen, in dem ein Pumpenrotor vorgesehen ist, wobei der Antriebsmotor einen Motorrotor und einen Motorstator aufweist, wobei mindestens ein Schalldämpfungsmittel zur Geräuschreduzierung vorgesehen ist, wobei die Auslassöffnungsanordnung sich an ein Schalldämpfungsmittel anschließt und wobei im Anschluss an den Pumpenrotorraum, zur Auslassöffnung hin gerichtet, Abdichtmittel vorgesehen sind.

Vakuumpumpen sind grundsätzlich aus dem Stand der Technik bekannt. Insbesondere wird hier auf die deutsche Offenlegungsschrift DE 10 2010 041 925 A1 und die europäische Offenlegungsschrift EP 2 554 848 A2 verwiesen, die beide eine Auslassöffnungsanordnung und Schalldämpfungsmittel aufweisen. Bei beiden Vakuumpumpen tritt jedoch das Problem auf, dass Schmutzpartikel mit der ausgestoßenen Luft in den anschließenden Schalldämpfungsraum gelangen beim Abschalten der Pumpe wieder in den Pumpenrotorraum gesogen werden. Aus der DE 10 2010 041 925 A1 ist eine gattungsgemäße Vakuumpumpe bekannt. Eine derartige elektrisch angetriebene KFZ-Vakuumpumpe generiert in einem Kraftfahrzeug (KFZ) unabhängig von dem Betriebszustand eines Verbrennungsmotors einen Unterdruck von beispielsweise absolut 100 Millibar, der beispielsweise zum Betrieb eines pneumatischen Bremskraftverstärkers und/oder anderer pneumatisch betriebener Nebenaggregate benötigt wird. Beim Abschalten strömt Luft aus der Umgebung aufgrund des noch vorherrschenden Innendruckes im Pumpenrotorraum durch die Auslassöffnung in die Pumpe. Um hierbei ein Ansaugen von Flüssigkeits- oder Schmutzpartikel in den Pumpenrotorraum zu verhindern, ist in einer Auslassöffnung des Pumpenrotorgehäuseteils ein labyrinthartiger Bereich als Abdichtmittel vorgesehen, der ein Zurückströmen von Flüssigkeits- oder Schmutzpartikeln verhindern soll. Darüber hinaus sind bei der gattungsgemäßen Pumpe Maßnahmen zur Schalldämpfung und/oder zur Schallabschirmung vorgenommen worden. Insbesondere die vorgesehenen Abdichtmittel bedingen eine aufwendige Herstellung der Vakuumpumpe. Darüber hinaus reiche bei mehreren 100 W starken Pumpen die Maßnahmen zur Schalldämpfung bzw. Schallabschirmung nicht aus.

Aufgabe der Erfindung ist es daher, eine gattungsgemäße elektrische KFZ-Vakuumpumpen-Anordnung derart weiter zu entwickeln, dass die obengenannten Nachteile auf einfache und kostengünstige Art und Weise vermeidet.

Diese Aufgabe wird erfindungsgemäß durch die Merkmale des Anspruchs 1 gelost, und nämlich dadurch, dass die Auslassöffnungsanordnung einen gegenüber dem Antriebsmotor und dem Pumpenaggregat abgeschlossenen Auslasskanal aufweist, der, in Richtung der Auslassöffnung gesehen, mindestens eine plötzliche Querschnittsänderung als Abdichtmittel mit einem A_{2/}A₁ von ≥ 3 aufweist, wobei A₂ die Querschnittsfläche eines Teilbereiches nach der Querschnittsänderung beschreibt und A₁ die Querschnittsfläche eines Teilbereiches vor der Querschnittsänderung beschreibt, wobei die Auslassöffnungsanordnung als Kanalanordnung in Form von aufeinander folgenden Kanalelementen in der auslassseitigen Stirnwand, in dem Pumpenrotorgehäuseteil und in der einlassseitigen Stirnwand vorgesehen ist. Es hat sich erwiesen, dass durch eine derartig einfache Maßnahme die Gefahr eines Ansaugens von Flüssigkeits- oder Schmutzpartikeln erheblich verringert werden kann. Außerdem kann eine derartige Anordnung auf einfache Weise mit Schallschutzmaßnahmen kombiniert werden. Hierbei ist es besonders vorteilhaft, wenn der Teilbereich des Auslasskanals nach der Querschnittsänderung eine Länge L ≥ 1,5 x D₂ aufweist, wobei D₂ den Durchmesser des Teilbereiches beschreibt. Durch die Ausbildung der Auslassöffnungsanordnung als Kanalanordnung können bestehende Gehäuseteile für die Auslassöffnung genutzt werden und wird eine erhebliche Schalldämpfung durch die Reflektionseigenschaften der Kanalanordnung gewährleistet.

Diese Schallschutzmaßnahmen können insbesondere darin bestehen, dass die Schalldämpfungsmittel mindestens zwei hintereinander geschaltete Schalldämpfungsräume aufweisen, wobei der erste Schalldämpfungsraum über eine erste Verbindungsanordnung fluidisch mit dem Pumpenrotorraum und über eine zweite Verbindungsanordnung fluidisch mit dem zweiten Schalldämpfungsraum verbunden ist und wobei der zweite Schalldämpfungsraum fluidisch mit der Auslassöffnungsanordnung verbunden ist, wobei mindestens ein Schalldämpfungsmittel in Form einer Kanalanordnung für die zweite Verbindungsanordnung und/oder den Auslasskanal vorgesehen ist.

In einer besonders vorteilhaften Ausführungsform ist der erste Schalldämpfungsraum in der auslassseitigen Stirnwand integriert.

In vorteilhafter Weise wird der erste Schalldämpfungsraum durch ein auf eine vom Pumpenrotor abgewandte Seite der auslassseitigen Stirnwand angeordnetes Deckelelement hergestellt, wobei die zweite Verbindunganordnung als Nut in der auslassseitigen Stirnwand ausgeführt ist.

In einer besonders vorteilhaften, Bauraum-freundlichen Ausführungsform weist der Gehäuseverbund ein Abschlussdeckelelement auf, das die auslassseitige Stirnwand derart umgreift, dass ein zweiter Schalldämpfungsraum ausgebildet ist.

In besonders vorteilhafter Weise ist die plötzliche Querschnittsänderung zwischen dem zweiten und dem dritten Kanalelement vorgesehen. Alternativ wäre auch eine plötzliche Querschnittsänderung herstellbar, wenn die plötzliche Querschnittsänderung im zweiten Kanalelement durch eine zum zweiten Kanalelement gerichtete Anlagefläche und/oder im dritten Kanalelement durch eine zum dritten Kanalelement gerichtete Anlagefläche ausgebildet ist.

In vorteilhafter Weise ist das Pumpenaggregat koaxial zu dem Antriebsmotor angeordnet, wobei eine Rotorwelle des Antriebsrotors in der einlassseitigen Stirnwand über Lagermittel gelagert ist.

Darüber hinaus ist es bauraumgünstig, wenn die Einlassöffnungsanordnung in der einlassseitigen Stirnwand vorgesehen ist.

Grundsätzlich sind alle Typen rotatorischer Pumpaggregate geeignet. Besonders bevorzugt ist als Pumpaggregat ein Flügelzellen-Pumpaggregat.

Die Erfindung wird nachfolgend anhand einer Zeichnung näher erläutert, hierbei zeigt:
Figur 1 eine perspektivische Ansicht einer erfindungsgemäßen elektrischen KFZ-Vakuumpumpen-Anordnung, und
Figur 2 eine Schnittansicht eines Pumpenaggregates und eines Teils des Antriebsmotors der KFZ-Vakuumpumpen-Anordnung aus Figur 1.

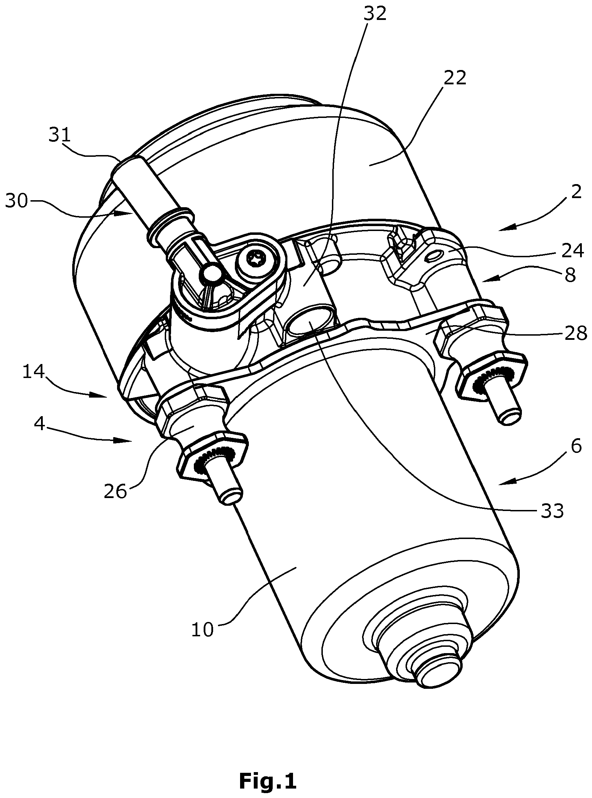

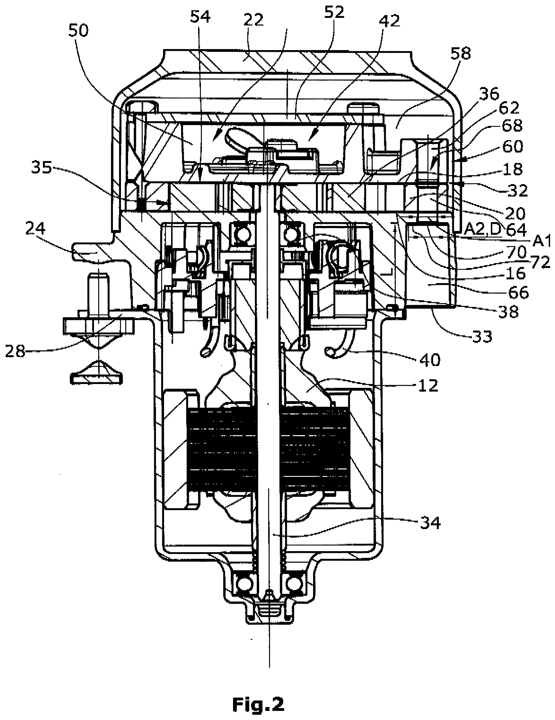

In den Figuren 1 und 2 ist eine elektrische KFZ-Vakuumpumpen-Anordnung 2 dargestellt, die in einem Kraftfahrzeug der Bereitstellung von Vakuum mit einem absoluten Druck von beispielsweise 100 mbar und niedriger dient. Das Vakuum wird hauptsächlich als potentielle Energie für Aktuatorik genutzt, beispielsweise für einen pneumatischen Bremskraftverstärker oder andere pneumatische KFZ-Aktuatoren. Ein elektrischer Antrieb für KFZ-Vakuumpumpen wird in zunehmendem Maße erforderlich, weil der KFZ-Verbrennungsmotor während des Fahrzeug-Betriebes nicht ständig läuft.

Die KFZ-Vakuumpumpen-Anordnung 2 besteht im Wesentlichen aus einem Gehäuseverbund 4, der einen Antriebsmotor 6 und ein Pumpenaggregat 8 aufweist. Der Antriebsmotor 6 ist hierbei in einem topfförmigen Motorgehäuse 10 vorgesehen und weist auf bekannte Weise einen Antriebsrotor 12 (siehe hierzu Figur 2) und einen nicht weiter dargestellten Antriebsmotorstator auf. Das Pumpenaggregat 8 weist ein Pumpenrotorgehäuse 14 auf, das aus einer einlass- und auslassseitigen Stirnwand 16, 18 und einem dazwischen angeordneten Pumpenrotorgehäuseteil 20 besteht (siehe auch hier insbesondere Figur 2). Der Gehäuseverbund 4 besitzt des Weiteren ein Abschlussdeckelelement 22, das die auslassseitige Stirnwand 18 und das Pumpenrotorgehäuseteil 20 umgreift und auf die einlassseitige Stirnwand 16 formschlüssig angreift. Das Rotorgehäuse 14 mit dem Abschlussdeckelelement 22 ist über ein erstes Flanschelement 24 mit dem topfförmigen Antriebsmotorgehäuse 10 verbunden. Die KFZ-Vakuumpumpen-Anordnung 2 kann unter Zwischenschaltung eines Dämpfungskörpers 26 mit einem Karosseriebauteil eines Kraftfahrzeuges verbunden werden, wobei das erste Flanschteil 24 ist mit einem zweiten Flanschteil 28 verbunden ist.

Die Figur 1 zeigt des Weiteren eine Einlassöffnungsanordnung 30 in Form eines Kunststoffrohrelementes mit einer Einlassöffnung 31, das in der einlassseitigen Stirnwand 16 vorgesehen ist und durch die aus einem KFZ-Aktuator abzuleitende Luft in das Pumpenaggregat 8 zu führen ist. Mit 32 ist die Auslassöffnungsanordnung bezeichnet, aus der die vom Pumpenaggregat 8 komprimierte Luft über eine Auslassöffnung 33 in die Umgebung abgeführt wird.

Figur 2 zeigt nun eine Schnittansicht des Pumpenaggregats 8 sowie eines Teils des Antriebsmotors 6. Wie bereits oben angedeutet, weist der Antriebsmotor 6 einen Antriebsrotor 12 auf, der drehfest auf einer Antriebsrotorwelle 34 befestigt ist, wobei die Antriebsrotorwelle 34 gleichzeitig als Rotorwelle für einen in einem Pumpenrotorraum 35 des Pumpenrotorgehäuses 14 vorgesehenen Pumpenrotor 36 dient. Die Antriebsrotorwelle 34 ist hierbei über ein als Wälzlager ausgebildetes Lagermittel 38 in der einlassseitigen Stirnwand 16 gelagert.

Der guten Ordnung halber sei festgehalten, dass mit 40 ein elektrisches Verbindungskabel bezeichnet ist zur Stromversorgung des Antriebsmotors 6. Die durch die Einlassöffnung 31 und die Einlassöffnungsanordnung 30 angesaugte und im Rotorraum 35 durch den als Flügelzellenrotor ausgebildete Pumpenrotor 36 komprimierte Luft wird durch eine erste Verbindungsanordnung 42 aus dem Rotorraum 35 ausgestoßen. über diese erste Verbindungsanordnung 42 gelangt die komprimierte Luft in einen ersten Schalldämpfungsraum 50, der in der auslassseitigen Stirnwand 18 integriert ist. Hierzu weist der erste Schalldämpfungsraum 50 auf der vom Pumpenrotor 36 abgewandten Seite der auslassseitigen Stirnwand 18 ein Deckelelement 52 auf. Durch dieses Deckelelement 52 wird auch die zweite Verbindungsanordnung 54 hergestellt, die im Wesentlichen als Nut in der auslassseitigen Stirnwand 18 ausgeführt ist. Über diese zweite Verbindungsanordnung 54 wird die komprimierte, in einem ersten Schalldämpfungsraum 50 gedämpfte Luft in einen zweiten Schalldämpfungsraum 58 überführt. Dieser Schalldämpfungsraum 58 wird im Wesentlichen dadurch hergestellt, dass das Abschlussdeckelelement 22 die auslassseitige Stirnwand 18 fluiddicht umgreift. Die komprimierte Luft wird dann über die als Kanalanordnung 60 ausgebildete Auslassöffnungsanordnung 32 an die Umgebung abgegeben. Die Kanalanordnung 60 ist hierbei aus aufeinander folgenden ersten, zweiten und dritten Kanalelementen 62, 64 und 66 aufgebaut und bildet einen in sich abgeschlossenen Auslasskanal 68 der nicht gegenüber dem Antriebsmotor 6 oder dem Pumpenaggregat 8 oder Teilen davon geöffnet ist. Das erste Kanalelement 62 ist in der auslassseitigen Stirnwand 18, das zweite Kanalelement 64 im Pumpenrotorgehäuseteil 20 und das dritte Kanalelement 66 in der einlassseitigen Stirnwand 16 vorgesehen. Dadurch, dass die Kanalanordnung 60 auf diese Weise einen langgestreckten Auslasskanal 68 ausformt, kann noch einmal eine zusätzliche Dämpfung des Luftschalles erreicht werden.

Erfindungsgemäß ist eine plötzliche Querschnittsänderung 70 als Abdichtmittel vorgesehen, wobei A₂ die Querschnittsfläche eines Teilbereiches, der hier als drittes Kanalelement 66 ausgebildet ist, nach der Querschnittsänderung 70 beschreibt und A₁ die Querschnittsfläche eines Teilbereiches, der hier als zweites Kanalelement 64 ausgebildet ist, vor der Querschnittsänderung 70 beschreibt. Das dritte Kanalelement 66 des Auslasskanals 68 nach der Querschnittsänderung 70 weist eine Länge L auf, die 2,5 x D₂ beträgt, wobei D₂ den Durchmesser des zweiten Kanalelementes 66 beschreibt. Dieses Abdichtmittel 70 verhindert, dass im Moment des Abschaltens Flüssigkeits- bzw. Schmutzpartikel aufgrund des herrschenden Unterdruckes in das evakuierte Pumpenaggregat strömen kann, da auf der zur Auslassöffnung 33 gerichteten Seite der Querschnittsänderung 70 die Strömungsgeschwindigkeit und damit der Unterdruck geringer ist. Das Verhältnis der Querschnittsflächen A1/A2 beträgt im vorliegenden Ausführungsbeispiel 4, ist also > 3 gewählt, so dass der Unterdruck nicht ausreicht um Partikel anzusaugen.

Auf einfache Weise ist hier die plötzliche Querschnittsänderung 70 im dritten Kanalelement 66 gießtechnisch realisiert. Zusätzlich oder alternativ können natürlich auch andere Querschnittsänderungen ausgebildet sein.

## Patentansprüche

1. Elektrische KFZ-Vakuumpumpen-Anordnung mit einem Gehäuseverbund (4) mit einer Einlassöffnungsanordnung (30) mit einer Einlassöffnung (31) und einer Auslassöffnungsanordnung (32) mit einer Auslassöffnung (32), der ein Pumpenaggregat (8) und einen Antriebsmotor (6) aufweist, wobei das Pumpenaggregat (8) ein Pumpenrotorgehäuse (14) bestehend aus einer einlass- und auslassseitigen Stirnwand (16, 18) und einem dazwischen angeordneten Pumpenrotorgehäuseteil (20) aufweist, die einen Pumpenrotorraum (35) einschließen, in dem ein Pumpenrotor (36) vorgesehen ist, wobei der Antriebsmotor (6) einen Motorrotor (12) und einen Motorstator aufweist, wobei mindestens ein Schalldämpfungsmittel (50, 58, 60) zur Geräuschreduzierung vorgesehen ist, wobei die Auslassöffnungsanordnung (32) sich an das Schalldämpfungsmittel (50, 58, 60) anschließt und wobei im Anschluss an den Pumpenrotorraum (35), zur Auslassöffnung (33) hin gerichtet, Abdichtmittel (70) vorgesehen sind, **dadurch gekennzeichnet, dass** die Auslassöffnungsanordnung (32) einen gegenüber dem Antriebsmotor (6) und dem Pumpenaggregat (8) abgeschlossenen Auslasskanal (68) aufweist, der, in Richtung der Auslassöffnung (33) gesehen, mindestens eine plötzliche Querschnittsänderung (70) als Abdichtmittel mit einem A₂/A₁ von ≥ 3 aufweist, wobei A₂ die Querschnittsfläche eines Teilbereiches (66) , der als drittes Kanalelement ausgebildet ist, nach der Querschnittsänderung (70) beschreibt und A₁ die Querschnittsfläche eines Teilbereiches (64) der als zweites Kanalelement ausgebildet ist, vor der Querschnittsänderung (70) beschreibt, wobei die Auslassöffnungsanordnung (32) als Kanalanordnung (60) in Form von aufeinander folgenden Kanalelementen (62, 64, 66) in der auslassseitigen Stirnwand (18), in dem Pumpenrotorgehäuseteil (20) und in der einlassseitigen Stirnwand (16) vorgesehen ist.

2. Elektrische KFZ-Vakuumpumpen-Anordnung nach Anspruch 1, **dadurch gekennzeichnet, dass** der Teilbereich (66) des Auslasskanals (68) nach der Querschnittsänderung (70) eine Länge L ≥ 1,5 x D₂ aufweist, wobei D₂ den Durchmesser des Teilbereiches (66) beschreibt.

3. Elektrische KFZ-Vakuumpumpen-Anordnung nach Anspruch 1 oder 2, **dadurch gekennzeichnet, dass** die Schalldämpfungsmittel (50, 58, 60) mindestens zwei hintereinander geschaltete Schalldämpfungsräume (50, 58) aufweisen, wobei der erste Schalldämpfungsraum (50) über eine erste Verbindungsanordnung (42) fluidisch mit dem Pumpenrotorraum (35) und über eine zweite Verbindungsanordnung (54) fluidisch mit dem zweiten Schalldämpfungsraum (58) verbunden ist und wobei der zweite Schalldämpfungsraum (58) fluidisch mit der Auslassöffnungsanordnung (32) verbunden ist, wobei mindestens ein Schalldämpfungsmittel in Form einer Kanalanordnung (60) für die zweite Verbindungsanordnung (54) und/oder den Auslasskanal (68) vorgesehen ist.

4. Elektrische KFZ-Vakuumpumpen-Anordnung nach einem der Ansprüche 1 - 3, **dadurch gekennzeichnet, dass** der erste Schalldämpfungsraum (50) in der auslassseitigen Stirnwand (18) integriert ist.

5. Elektrische KFZ-Vakuumpumpen-Anordnung nach einem der vorhergehenden Ansprüche, **dadurch gekennzeichnet, dass** der erste Schalldämpfungsraum (50) durch ein auf eine vom Pumpenrotor (36) abgewandte Seite der auslassseitigen Stirnwand (18) angeordnetes Deckelelement (52) hergestellt wird, wobei die zweite Verbindunganordnung (54) als Nut in der auslassseitigen Stirnwand (18) ausgeführt ist.

6. Elektrische KFZ-Vakuumpumpen-Anordnung nach einem der vorhergehenden Ansprüche, **dadurch gekennzeichnet, dass** der Gehäuseverbund (4) ein Abschlussdeckelelement (22) aufweist, dass die auslassseitige Stirnwand (18) derart umgreift, dass ein zweiter Schalldämpfungsraum (58) ausgebildet ist.

7. Elektrische KFZ-Vakuumpumpen-Anordnung nach einem der vorhergehenden Ansprüche, **dadurch gekennzeichnet, dass** die plötzliche Querschnittsänderung (70) zwischen dem zweiten und dem dritten Kanalelement (64, 66) vorgesehen ist.

8. Elektrische KFZ-Vakuumpumpen-Anordnung nach einem der vorhergehenden Ansprüche, **dadurch gekennzeichnet, dass** die plötzliche Querschnittsänderung im zweiten Kanalelement (64) durch eine zum zweiten Kanalelement (64) gerichtete Anlagefläche und/oder im dritten Kanalelement (66) durch eine zum dritten Kanalelement (66) gerichtete Anlagefläche (72) ausgebildet ist.

9. Elektrische KFZ-Vakuumpumpen-Anordnung nach einem der vorhergehenden Ansprüche, **dadurch gekennzeichnet, dass** das Pumpenaggregat (8) koaxial zu dem Antriebsmotor (6) angeordnet ist, wobei eine Rotorwelle (34) des Antriebsrotors (12) in der einlassseitigen Stirnwand (16) über Lagermittel (38) gelagert ist.

10. Elektrische KFZ-Vakuumpumpen-Anordnung nach einem der vorhergehenden Ansprüche, **dadurch gekennzeichnet, dass** die Einlassöffnungsanordnung (30) in der einlassseitigen Stirnwand (16) vorgesehen ist.

11. Elektrische KFZ-Vakuumpumpen-Anordnung nach einem der vorhergehenden Ansprüche, **dadurch gekennzeichnet, dass** das Pumpenaggregat (8) ein Flügelzellen-Pumpenaggregat ist.

## Claims

1. Electric automotive vacuum pump arrangement comprising a housing assembly (4) comprising an inlet opening arrangement (30) with an inlet opening (31) and an outlet opening arrangement (32) with an outlet opening (32), which housing assembly (4) comprises a pump unit (8) and a drive motor (6), wherein the pump unit (8) comprises a pump rotor housing (14) consisting of an inlet-side and outlet-side end wall (16, 18) and a pump rotor housing part (20) arranged therebetween, which enclose a pump rotor chamber (35) in which a pump rotor (36) is provided, wherein the drive motor (6) comprises a motor rotor (12) and a motor stator, wherein at least one sound damping means (50, 58, 60) is provided for noise reduction, wherein the outlet opening arrangement (32) follows sound damping means (50, 58, 60) and wherein sealing means (70) are provided subsequent to the pump rotor chamber (35) and in the direction of the outlet opening (33),
**characterized in that** the outlet opening arrangement (32) comprises an outlet channel (68) which is closed with respect to the drive motor (6) and the pump unit (8) and which, viewed in the direction of the outlet opening (33), comprises at least one abrupt cross section change (70) with A2/A1 > 3 as sealing means, A2 representing the cross sectional area of a section (66) after the cross section change (70), which section (66) is designed as a third channel element, and A1 representing the cross sectional area of a section (64) before the cross sectional change (70), which section (64) is designed as a second channel element, wherein the outlet opening arrangement (32) is provided as a channel arrangement (60) in the form of successive channel elements (62, 64, 66) in the outlet-side end wall (18), in the pump rotor housing part (20) and in the inlet-side end wall (16).

2. Electric automotive vacuum pump arrangement according to claim 1, **characterized in that** the section (66) of the outlet channel (68), after the cross section change (70), has a length L > 1.5 x D2, D2 representing the diameter of the section (66).

3. Electric automotive vacuum pump arrangement according to claim 1 or 2, **characterized in that** the sound damping means (50, 58, 60) comprise at least two successive sound damping chambers (50, 58), wherein the first sound damping chamber (50) is fluidically connected to the pump rotor chamber (35) via a first connection arrangement (42) and to the second sound damping chamber (58) via a second connection arrangement (54), and wherein the second sound damping chamber (58) is fluidically connected to the outlet opening arrangement (32), wherein at least one sound damping means in the form of a channel arrangement (60) is provided for the second connection arrangement (54) and/or the outlet channel (68).

4. Electric automotive vacuum pump arrangement according to one of claims 1 - 3, **characterized in that** the first sound damping chamber (50) is integrated in the outlet-side end wall (18).

5. Electric automotive vacuum pump arrangement according to one of the preceding claims, **characterized in that** the first sound damping chamber (50) is realized by a cover element (52) arranged on a side of the outlet-side end wall (18) facing away from the pump rotor (36), wherein the second connection arrangement (54) is designed as a groove in the outlet-side end wall (18).

6. Electric automotive vacuum pump arrangement according to one of the preceding claims, **characterized in that** the housing assembly (4) comprises an end cover element (22) which embraces the outlet-side end wall (18) in such a way that a second sound damping chamber (58) is defined.

7. Electric automotive vacuum pump arrangement according to one of the preceding claims, **characterized in that** the abrupt cross section change (70) is provided between the second and the third channel element (64, 66).

8. Electric automotive vacuum pump arrangement according to one of the preceding claims, **characterized in that** the abrupt cross section change is realized in the second channel element (64) by an abutting surface which faces the second channel element (64) and/or in the third channel element (66) by an abutting surface (72) which faces the third channel element (66).

9. Electric automotive vacuum pump arrangement according to one of the preceding claims, **characterized in that** the pump unit (8) is arranged coaxially with the drive motor (6), wherein a rotor shaft (34) of the drive rotor (12) is supported in the inlet-side end wall (16) via bearing means (38).

10. Electric automotive vacuum pump arrangement according to one of the preceding claims, **characterized in that** the inlet opening arrangement (30) is provided in the inlet-side end wall (16).

11. Electric automotive vacuum pump arrangement according to one of the preceding claims, **characterized in that** the pump unit (8) is a vane pump unit.

## Revendications

1. Ensemble de pompe à vide électrique pour véhicules automobiles avec un assemblage de boîtiers (4) avec un ensemble d'ouverture d'entrée (30) avec une ouverture d'entrée (31) et un ensemble d'ouverture de sortie (32) avec une ouverture de sortie (32), qui comprend un agrégat de pompe (8) et un moteur d'entraînement (6), l'agrégat de pompe (8) comprenant un boîtier de rotor de pompe (14) composé d'une paroi frontale (16, 18) côté entrée et côté sortie et d'une partie de boîtier de rotor de pompe (20) disposée entre elles, qui enferment un espace de rotor de pompe (35), dans laquelle est prévu un rotor de pompe (36), le moteur d'entraînement (6) comprenant un rotor de moteur (12) et un stator de moteur, au moins un moyen d'insonorisation (50, 58, 60) étant prévu pour réduire le bruit, l'ensemble d'ouverture de sortie (32) se raccordant à des moyens insonorisants (50, 58, 60) et des moyens d'étanchéité (70) étant prévus à la suite de la chambre de rotor de pompe (35), orientés vers l'ouverture de sortie (33),
**caractérisé en ce que** l'ensemble d'ouverture de sortie (32) comprend un canal de sortie (68) fermé par rapport au moteur d'entraînement (6) et à l'agrégat de pompe (8), qui, vu en direction de l'ouverture de sortie (33), comprend au moins un changement de section abrupt (70) en tant que moyen d'étanchéité avec un A2/A1 de > 3, A2 étant la surface de section d'une zone partielle (66) qui est réalisée en tant que troisième élément de canal, après le changement de section (70) et A1 indique la surface de la section d'une partie (64) qui est formée comme deuxième élément de canal avant le changement de section (70), l'ensemble d'ouverture de sortie (32) étant prévu comme ensemble de canaux (60) sous la forme d'éléments de canaux successifs (62, 64, 66) dans la paroi frontale côté sortie (18), dans la partie de boîtier de rotor de pompe (20) et dans la paroi frontale côté entrée (16).

2. Ensemble de pompe à vide électrique pour véhicules automobiles selon la revendication 1, **caractérisé en ce que** la zone partielle (66) du canal de sortie (68) comprend, après le changement de section (70), une longueur L > 1,5 x D2, D2 étant le diamètre de la zone partielle (66).

3. Ensemble de pompe à vide électrique pour véhicule automobile selon la revendication 1 ou 2, **caractérisé en ce que** les moyens insonorisants (50, 58, 60) comprennent au moins deux espaces insonorisants (50, 58) montés en série, dans lequel le premier espace insonorisant (50) est relié de manière fluidique à l'espace de rotor de pompe (35) par un premier agencement de connexion (42) et est relié de manière fluidique au deuxième espace insonorisant (58) par un deuxième agencement de connexion (54), et dans lequel le deuxième espace insonorisant (58) est relié de manière fluidique à l'ensemble d'ouverture de sortie (32), au moins un moyen insonorisant sous la forme d'un agencement de canal (60) étant prévu pour le deuxième agencement de connexion (54) et/ou le canal de sortie (68).

4. Ensemble de pompe à vide électrique pour véhicule automobile selon l'une des revendications 1 à 3, **caractérisé en ce que** le premier espace insonorisant (50) est intégré dans la paroi frontale (18) du côté de la sortie.

5. Ensemble de pompe à vide électrique pour véhicule automobile selon l'une quelconque des revendications précédentes, **caractérisé en ce que** le premier espace insonorisant (50) est réalisé par un élément de couvercle (52) disposé sur une face de la paroi frontale (18) côté refoulement opposée au rotor de pompe (36), le deuxième agencement de connexion (54) étant réalisé sous forme de rainure dans la paroi frontale (18) côté refoulement.

6. Ensemble de pompe à vide électrique pour véhicules automobiles selon l'une des revendications précédentes, **caractérisé en ce que** l'assemblage de boîtiers (4) comprend un élément de plafond de fermeture (22) qui entoure la paroi frontale (18) côté sortie de telle sorte qu'un deuxième espace insonorisant (58) est formé.

7. Ensemble de pompe à vide électrique pour véhicules automobiles selon l'une quelconque des revendications précédentes, **caractérisé en ce que** le changement de section abrupt (70) est prévu entre le deuxième et le troisième élément de conduit (64, 66).

8. Ensemble de pompe à vide électrique pour véhicule automobile selon l'une quelconque des revendications précédentes, **caractérisé en ce que** le changement de section abrupt est réalisé dans le deuxième élément de canal (64) par une surface d'appui orientée vers le deuxième élément de canal (64) et/ou dans le troisième élément de canal (66) par une surface d'appui (72) orientée vers le troisième élément de canal (66).

9. Ensemble de pompe à vide électrique pour véhicule automobile selon l'une des revendications précédentes, **caractérisé en ce que** l'agrégat de pompe (8) est disposé coaxialement au moteur d'entraînement (6), un arbre de rotor (34) du rotor d'entraînement (12) étant supporté dans la paroi frontale (16) côté entrée par des moyens de palier (38).

10. Ensemble de pompe à vide électrique pour véhicule automobile selon l'une quelconque des revendications précédentes, **caractérisé en ce que** l'ensemble d'ouverture d'entrée (30) est prévu dans la paroi frontale (16) du côté entrée.

11. Ensemble de pompe à vide électrique pour véhicules automobiles selon l'une des revendications précédentes, **caractérisé en ce que** l'agrégat de pompe (8) est un agrégat de pompe à palettes.
